# EUROPEAN PATENT SPECIFICATION

(11) **EP 2 372 220 B1**
(45) Date of publication and mention of the grant of the patent: **09.05.2012**
(21) Application number: 10153035.0
(22) Date of filing: 09.02.2010
(51) Int. Cl.: F16M 11/10

(54) **Display with a fluid balance structure**
Anzeige mit einer Flüssigkeitsgleichgewichtsstruktur
Affichage avec structure d'équilibre de fluides

(43) Date of publication of application: 05.10.2011
(73) Proprietor: Hannspree, Inc., Taipei (TW)
(72) Inventor: Tsai, Stephen, Hsi Chih City (TW); Lai, Li-Li, Taipei (TW)
(74) Representative: Viering, Jentschura & Partner

(56) References cited:
- WO-A2-2008/086245
- GB-A- 2 096 234
- US-A- 4 606 524
- US-A1- 2004 118 985

## Description

### BACKGROUND OF THE INVENTION

### 1. Field of the Invention

The present invention relates to a display capable of adjusting the angle of inclination, and more particularly, to a display capable of adjusting the angle of inclination with a fluid balance structure.

### 2. Description of Related Art

Conventional Cathode Ray Tube (CRT) displays are bulky, and moreover, are detrimental to human health because of radiation. Such setbacks have been seriously criticized and as such, CRT displays have been out of market gradually and replaced by flat panel displays, such as liquid crystal displays (LCDs). With continuous improvement on the manufacturing technology of displays and the mass production of LCDs, nowadays LCD flat panel displays are quite popular, and have become the mainstream in the display market.

LCDs achieve color rendering by controlling orientation of liquid crystal molecule arrangement so as to deflect light to reveal various colors. As such, a screen of the display has a certain range of view angle and a desirable angle of vision. In other words, it is critical for the design of LCDs if the angle of inclination for an LCD screen can be adjusted as required by the need of users.

Conventional LCDs for adjusting the angle of inclination of the display screen relies on a resilient pivoting structure or a hinge structure for example GB2096234, whereby the angle of inclination for the LCD screen can be controlled and fixed.

Nevertheless, such a resilient pivoting or hinge structure for the LCD screen not only is complicated, difficult to manufacture and also costs higher. Further, in the case of violent shaking or vibrating, such a resilient pivoting or hinge structure is unstable and likely to cause damages. On the other hand, when the user needs to adjust the angle of inclination of the display screen, he/she needs to use one hand to hold the base of the display and the other hand to adjust the angle of inclination of the display screen, making the user feel inconvenient. Moreover, the display screen using such a known pivoting structure always has a quite common appearance, and this dull configuration can hardly bring customers a deep impression, let alone encourage the customers to purchase the product. Therefore, the structure for adjusting the angle of inclination of the display screen, as mentioned above, still can be improved. For example by using a support shown in US 4606524, US 6581 888, US 20040118985, or WO2008 086245

### SUMMARY OF THE INVENTION

The present invention is to provide a display with a fluid balance structure, comprising a screen, a supporting base, and a fluid. The supporting base connects with the screen, and includes an arc bottom provided with a plurality of perforated partition plates, wherein each perforated partition plate neighbors, at each side, a receiving space.

The fluid can flow through the plurality of perforated partition plates and be selectively distributed in different receiving spaces.

By means of the above-mentioned structure, a user can easily, with one hand, adjust the angle of inclination of the display screen. As compared with the conventional way for adjusting the angle of inclination of the display screen, the present invention has merits in convenience and saving efforts.

According to the present invention, the fluid may refer to liquid such as water, or solid particles such as sand or metallic particles. The arc bottom may be made of a rigid material or a soft material. In the case of a soft arc bottom, since the large area of arc bottom surface contacts with the surface of a table, shaking of the supporting base can be effectively refrained. The supporting base may be made of a transparent material so as to have a diversification in visual effect.

The plurality of perforated partition plates are arranged parallel with one another, or are arranged unparallel with one another, for instance, are isogonally arranged with one another along the arc bottom of the supporting base. Neighboring perforated partition plates are each provided with through holes, where at least one through hole, at each of the perforated partition plates, are staggered from each other, which can effectively prevent the fluid from flowing reversely.

The perforated partition plates each includes a first partition plate and a second partition plate, where the first partition plate and the second partition plate can engage with and slide relatively to each other such that the second partition plate and the first partition plate can be aligned with, or staggered from, each other selectively. Through such a hole-switching function, when the fluid refers to a liquid, the fluid can be distributed so as to maintain the supporting base stably at a particular state.

Further, according to the present invention, the first partition plate is provided with a recess, and the second partition plate is provided with a protrusion, such that the protrusion can engage with and slide in the recess. There is a button extending out of the supporting base for pushing the first or second partition plate.

Other objects, advantages, and novel features of the present invention will become more apparent from the following detailed descriptions when taken in conjunction with the accompanying drawings.

### BRIEF DESCRIPTION OF THE DRAWINGS

FIG 1 is a perspective view illustrating a display with a fluid balance structure according to a first embodiment of the present invention;
FIG. 2 is a detailed internal view illustrating a supporting base of the display according to the first embodiment of the present invention;
FIG 3 is a cross-sectional view of the supporting base taken alone cutting line A-A of FIG 2, where the supporting base stands at an upright state;
FIG. 4 is a schematic view illustrating the supporting base standing at an inclined state;
FIG 5 is a schematic view illustrating the supporting base of a display with a fluid balance structure according to a second embodiment of the present invention;
FIG. 6 is a partial perspective view illustrating a display with a fluid balance structure according to a third embodiment of the present invention;
FIG 7 is a schematic view illustrating the first state of a perforated partition plate according to the third embodiment of the present invention; and
FIG. 8 is a schematic view illustrating a second state of the perforated partition plate according to the third embodiment of the present invention.

### DETAILED DESCRIPTION OF THE PREFERRED EMBODIMENTS

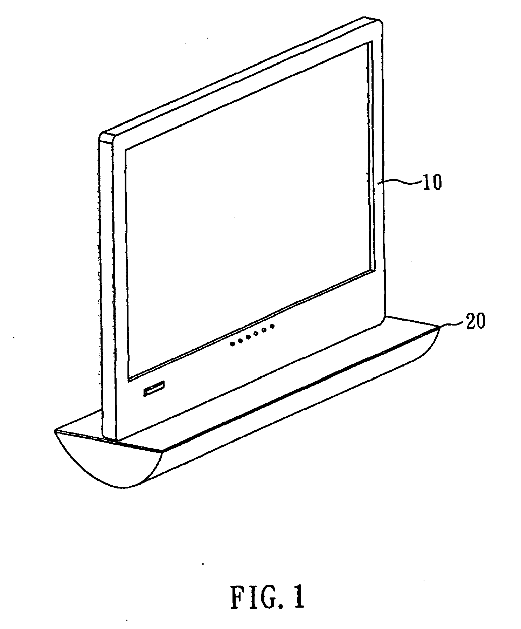

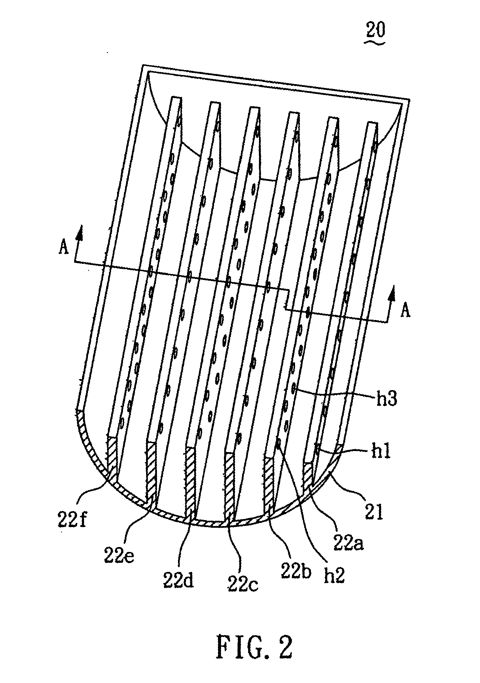

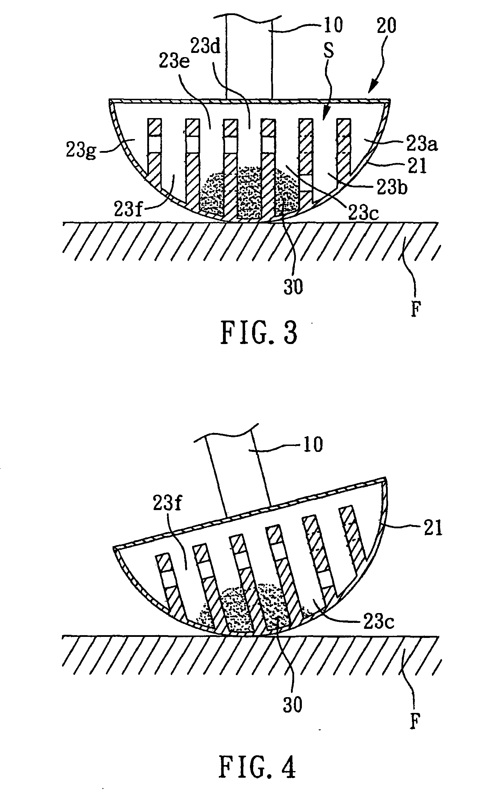

Referring to FIG 1, a perspective view illustrating a display with a fluid balance structure according to a first embodiment of the present invention, a display capable of adjusting angle of inclination with a fluid balance structure comprises a screen 10 for displaying information images and a supporting base 20 for connects with the screen 10. Referring to FIG.2, a detailed internal view illustrating a supporting base of the display, the supporting base 20 includes an arc bottom 21 and a plurality of perforated partition plates 22a to 22f provided inside an internal space S (shown in FIG.3) of the supporting base 20 and extending upward from the arc bottom 21, where each of the perforated partition plates 22a to 22f is provided, at its neighboring sides, with a receiving space, respectively. In the present embodiment, the supporting base 20 is made of a rigid material.

Referring to FIG. 3, a cross-sectional view of the supporting base taken alone cutting line A-A of FIG 2, all the perforated partition plates 22a to 22f are arranged parallel with one another, and that each of the perforated partition plates 22a to 22f has a plurality of through holes, where neighboring perforated partition plates 22a to 22f are provided with through holes corresponding to each other such as h1 and h2, and with through holes staggered from each other such as h1 and h3. The two perforated partition plates 22a,22f, which are remotest from each other, each has a receiving space, 23a or 23g defined by the perforated partition plate 22a or 22f itself and the supporting base 20; while other receiving spaces 23b to 23f are each defined by respective two neighboring perforated partition plates 22a to 22f.

In the internal space S of the supporting base 20 there are provided with a fluid 30, for instance sand. In virtue of its fluid characteristic, the fluid 30 can pass through the through holes of the perforated partition plates 22a to 22f and are distributed to different receiving spaces. In the present embodiment, the arc bottom 21 has a circular surface. Of course, as required in terms of design or specific functions, the arc bottom 21 may have an elliptical surface, parabolic surface, hyperbolic surface; or a spherical surface, ellipsoidal surface, paraboloidal surface, or other equivalent curved surfaces; or even a polygonal surface similar to an arc surface. The arc bottom 21 may be made of a rigid material or soft material. In the case of a soft arc bottom, since large area of the arc bottom 21 surface contacts with the surface of a table, shaking of the supporting base 20 can be effectively refrained. The supporting base 20 may be made of a transparent material so as to have a diversification in visual effect.

As shown in FIG. 3, the display with the fluid balance structure is disposed on a plane F at an upright state, where the fluid 30 is uniformly distributed at center of the supporting base 20.

Referring to FIG 4, a schematic view illustrating the supporting base 20 standing at an inclined state on the plane F, when a user attempts to alter the angle of inclination of the screen 10, he/she may push the screen 10 or the supporting base 20 to a specific angle, so that the fluid 30 can flow through the through holes of the perforated partition plates 22a to 22f, and flow between one receiving space to another. Due to such re-distribution of the fluid 30, the location of the center of gravity for the display has thus changed where the display finally stabilizes at an inclined state, as shown in FIG. 4. Apparently, the fluid 30 moves from the receiving space 23c to the receiving space 23f. In particular, the above-mentioned manipulation can be achieved merely by using one hand for the user.

It is understood, therefore, that the display according to the present embodiment is a simple in structure, but also is convenient to adjust the angle of inclination for the display screen with one hand. Besides, such a unique design with extremely fantastic configuration and simplicity results in a novel appearance and brings consumers an appeal feeling.

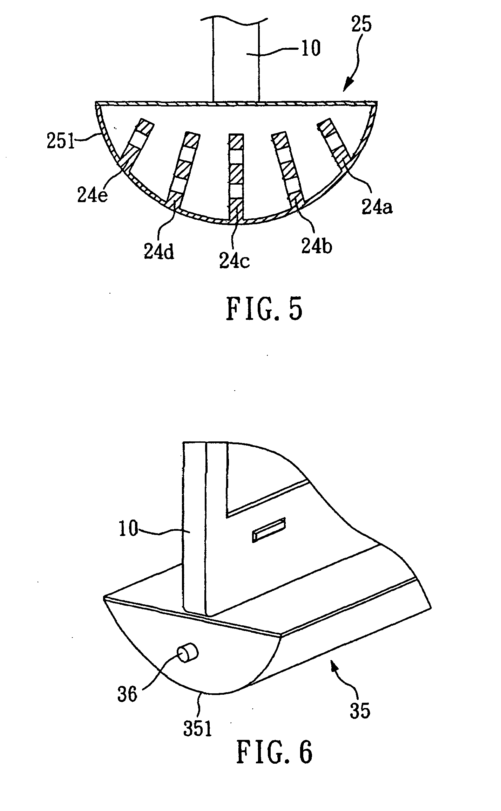

Now referring to FIG 5, a schematic view illustrating a supporting base 25 of the display according to a second embodiment of the present invention, the feature of the present embodiment resides in that there are perforated partition plates 24a to 24e arranged along an arc bottom 251 of the supporting base 25, where the perforated partition plates 24a to 24e are arranged unparallel with one another, for instance, are isogonally arranged with one another according to the present embodiment.

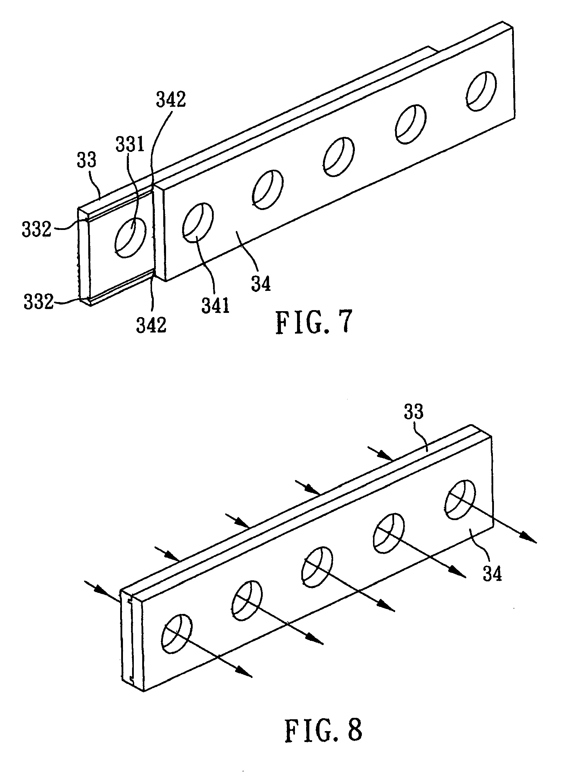

Further, referring to FIG 6, a partial perspective view illustrating a display according to a third embodiment of the present invention, and to FIG. 7, a schematic view illustrating the first state of a perforated partition plate, a supporting base 35 is made of a transparent material, and a button 36 extends outside of the supporting base 35. There are perforated partition plates each including a first partition plate 33 and a second partition plate 34, where the first partition plate 33 is provided with a paired recesses 332 and the second partition plate 34 with a paired protrusions 342, such that the protrusions 342 can engage with and slide in the recesses 332. As a result, there are two kinds of states occurred for the perforated partition plate, namely, through a relative slide action between the second partition plate 34 and the first partition plate 33, the positions of holes 341,331 thereon can or cannot be aligned with each other.

As shown in FIG 7, the holes 341,331 of the second partition plate 34 and the first partition plate 33 are not aligned with each other, so that the fluid 30 cannot flow through the perforated partition plate. Further, referring to FIG 8, a schematic view illustrating the second state of the perforated partition plate, when the second partition plate 34 and the first partition plate 33 move relatively to each other, for instance through a manipulator (the button 36 according to the present embodiment) for pushing the first or second partition plate 33,34, the holes 341,331 thereof are then aligned with each other, so that the fluid 30 can flow through the holes 341,331 of the partition plates 34,33 and be re-distributed in the receiving spaces 23a to 23g. This can also achieve the purpose of adjusting the angle of inclination of the display screen. In the present embodiment, the manipulator refers to the button 36. Such a design is particularly appropriate for the occasion when liquid, for instance water, is used as the fluid. This is because liquid has a stronger flowability, and without such a hole-switching function, the liquid will be difficult to remain at a particular position.

Although the present invention has been explained in relation to its preferred embodiments, it is to be understood that many other possible modifications and variations can be made without departing from the scope of the invention as hereinafter claimed.

## Claims

1. A display with a fluid balance structure, using fluid (30)
to implement the adjustment of the angle of inclination of a flat panel display, and comprising:
a screen (10);
a supporting base (20), connecting with the screen (10), and including an arc bottom (21) and the fluid, **characterised in that** on the arc bottom, within the supporting base (20), a plurality of perforated partition plates (22a-22f, 24a-24e, 33, 34) is placed, wherein each perforated partition plate (22a-22f, 24a-24e, 33, 34) neighbors, at each side, a fluid receiving space (23a-23g), respectively; and
the fluid (30) is able to flow through the plurality of perforated partition plates (22a-22f, 24a-24e, 33, 34) so as to be selectively distributed in the receiving spaces (23a-23g).

2. The display with a fluid balance structure as claimed in claim 1, wherein the fluid (30) is a liquid.

3. The display with a fluid balance structure as claimed in claim 1, wherein the fluid (30) is a type of solid particles.

4. The display with a fluid balance structure as claimed in claim 1, wherein the plurality of perforated partition plates (22a-22f, 24a-24e, 33, 34) are arranged parallel with one another.

5. The display with a fluid balance structure as claimed in claim 1, wherein the plurality of perforated partition plates (22a-22f, 24a-24e, 33, 34) are arranged unparallel with one another.

6. The display with a fluid balance structure as claimed in claim 5, wherein the plurality of perforated partition plates(22a-22f, 24a-24e, 33, 34) are isogonally arranged with one another along the arc bottom (21) of the supporting base (20).

7. The display with a fluid balance structure as claimed in claim 1, wherein in two adjacent perforated partition plates (22a-22f, 24a-24e, 33, 34), at least two through holes are staggered from each other.

8. The display with a fluid balance structure as claimed in claim 1, wherein the arc bottom (21) is made of a rigid material.

9. The display with a fluid balance structure as claimed in claim 1, wherein the arc bottom (21) is made of a soft material.

10. The display with a fluid balance structure as claimed in claim 1, wherein the perforated partition plates (22a-22f, 24a-24e, 33, 34) each includes a first partition plate (33) and a second partition plate (34), and wherein the first partition plate (33) and the second partition plate (34) can engage with and slide relatively to each other such that the second partition plate (34) and the first partition plate (33) can be aligned with, or staggered from, each other selectively.

11. The display with a fluid balance structure as claimed in claim 10, wherein the first partition plate (33) is provided with a recess (332), and the second partition plate (34) is provided with a protrusion (342), such that the protrusion (342) can engage with and slide in the recess (332).

12. The display with a fluid balance structure as claimed in claim 10, further comprising a button (36) extending out of the supporting base (20) for pushing the first or second partition plate (33, 34).

13. The display with a fluid balance structure as claimed in claim 1, wherein the supporting base (20) is made of a transparent material.

## Patentansprüche

1. Eine Anzeige mit einer Flussigkeitswaage, mit welcher der Neigungswinkel eines Flachbildschirms mit Hilfe einer Flüssigkeit (30) justiert wird und die aufgebaut ist aus:
einer Anzeige (10);
einer Tragbasis (20), die mit der Anzeige (10) verbunden ist, eine gebogene Bodenfläche (21) aufweist und die Flüssigkeit (30) enthält, **dadurch gekennzeichnet, dass** auf der gebogenen Bodenfläche (21) innerhalb der Tragbasis (20) mehrere perforierte Trennplatten (22a-22f, 24a-24e, 33, 34) angeordnet sind, wobei jede perforierte Trennplatte (22a-22f, 24a-24e, 33, 34) auf allen Seiten an je einen Flüssigkeitsbehälter (23a-23g) anstößt; und
die Flüssigkeit (30) durch die mehreren perforierten Trennplatten (22a-22f, 24a-24e, 33, 34) fließen kann, um die Flüssigkeit wahlweise in den Flüssigkeitsbehältern (23a-23g) zu verteilen.

2. Die Anzeige mit einer Flüssigkeitswaage nach Anspruch 1, **dadurch gekennzeichnet, dass** als Flüssigkeit (30) eine flüssige Substanz verwendet wird.

3. Die Anzeige mit einer Flüssigkeitswaage nach Anspruch 1, **dadurch gekennzeichnet, dass** als Flüssigkeit (30) eine Art fester Partikel verwendet wird.

4. Die Anzeige mit einer Flüssigkeitswaage nach Anspruch 1, **dadurch gekennzeichnet, dass** die mehreren perforierten Trennplatten (22a-22f, 24a-24e, 33, 34) parallel zueinander angeordnet sind.

5. Die Anzeige mit einer Flüssigkeitswaage nach Anspruch 1, **dadurch gekennzeichnet, dass** die mehreren perforierten Trennplatten (22a-22f, 24a-24e, 33, 34) nicht parallel zueinander angeordnet sind.

6. Die Anzeige mit einer Flüssigkeitswaage nach Anspruch 5, **dadurch gekennzeichnet, dass** die mehreren perforierten Trennplatten (22a-22f, 24a-24e, 33, 34) der gebogenen Bodenfläche (21) der Tragbasis (20) entlang gleichwinklig zueinander angeordnet sind.

7. Die Anzeige mit einer Flüssigkeitswaage nach Anspruch 1, **dadurch gekennzeichnet, dass** in zwei aneinander grenzenden perforierten Trennplatten (22a-22f, 24a-24e, 33, 34) mindestens zwei durchgehende Löcher voneinander versetzt angeordnet sind.

8. Die Anzeige mit einer Flüssigkeitswaage nach Anspruch 1, **dadurch gekennzeichnet, dass** die gebogene Bodenfläche (21) aus einem steifen Material besteht.

9. Die Anzeige mit einer Flüssigkeitswaage nach Anspruch 1, **dadurch gekennzeichnet, dass** die gebogene Bodenfläche (21) aus einem weichen Material besteht.

10. Die Anzeige mit einer Flüssigkeitswaage nach Anspruch 1, **dadurch gekennzeichnet, dass** die perforierten Trennplatten (22a-22f, 24a-24e, 33, 34) aus je einer ersten Trennplatte (33) und einer zweiten Trennplatte (34) aufgebaut ist, und wobei die erste Trennplatte (33) und die zweite Trennplatte (34) ineinander einrasten und einander entlang bewegt werden können, um die erste Trennplatte (33) und die zweite Trennplatte (34) wahlweise entweder nacheinander auszurichten oder versetzt voneinander anzuordnen.

11. Die Anzeige mit einer Flüssigkeitswaage nach Anspruch 10, **dadurch gekennzeichnet, dass** die erste Trennplatte (33) mit einer Aussparung (332) und die zweite Trennplatte (34) mit einem Vorsprung (342) versehen ist, wobei die zweite Trennplatte (34) mit ihrem Vorsprung (342) in die Aussparung (332) der ersten Trennplatte (33) einrücken und in der Aussparung (332) gleitend bewegt werden kann.

12. Die Anzeige mit einer Flüssigkeitswaage nach Anspruch 10, weiter aufgebaut aus einem Knopf (36), der von der Tragbasis (20) hervorsteht, um mit diesem die erste und zweite Trennplatte (33, 34) anzuschieben.

13. Die Anzeige mit einer Flüssigkeitswaage nach Anspruch 1, **dadurch gekennzeichnet, dass** die Tragbasis (20) aus einem transparenten Material besteht.

## Revendications

1. Un écran avec une structure de stabilité de liquide , en utilisant un fluide (30) pour mettre en oeuvre l'ajustement de l'angle d'inclinaison d'un écran plat, et comprenant:
un écran (10);
une base d'appui (20), connexion avec l'écran (10), et comprenant un arc inferieur (21) et le fluide, **caractérisé par** l'arc inferieur dans la base de support (20), une pluralité de plaques de séparation perforées (22a-22f, 24a-24e, 33, 34) est placée dans chaque plaque de séparation perforée voisines (22a-22f, 24a-24e, 33, 34), de chaque côté, un espace de réception de fluide (23a-23g), respectivement; est le liquide (30), est capable de circuler à travers la pluralité de plaques de partition perforées (22a-22f, 24a-24e, 33, 34) distribués de façon sélective dans les espaces de réception (23a-23g).

2. L'affichage avec une structure de stabilité de liquide selon la revendication 1, dans laquelle le fluide (30) est un liquide.

3. L'affichage avec une structure de stabilité de liquide tel que revendiqué dans la revendication 1dans laquelle le fluide (30) est un type de particules solides.

4. L'affichage avec une structure de stabilité de liquide selon la revendication 1, dans lequel la pluralité de plaques de séparation perforée (22a-22f, 24a-24e, 33,34) sont disposés parallèlement les unes des autres.

5. L'écran avec une structure de stabilité de liquide selon la revendication 1, dans lequel la pluralité de plaques de séparation perforée (22a-22f, 24a-24e, 33,34) ne sont pas disposés parallèlement les unes des autres.

6. L'affichage avec une structure de stabilité de liquide selon la revendication 5, dans lequel la pluralité de plaques de séparation perforée (22a-22f, 24a-24e, 33,34) sont disposés en ligne isogonal les unes avec les autres le long de l'arc inférieure (21) de la base de support (20).

7. L'affichage avec une structure de stabilité de liquide selon la revendication 1, ou deux plaques adjacentes de séparation perforée (22a-22f, 24a-24e, 33, 34), au moins deux trous sont décalés les uns des autres.

8. L'affichage avec une structure de stabilité de liquide selon la revendication 1, où le bac inferieure(21) est fait d'un matériau rigide.

9. L'affichage avec une structure de stabilité de liquide selon la revendication 1, où le bac inferieure(21) est constitué d'un matériau souple.

10. L'affichage avec une structure de stabilité de liquide selon la revendication 1, où les plaques de séparation perforée (24a-24e 22a-22f, 33,34) comprennent chacune une plaque de première partition (33) et une plaque de seconde partition (34), et ou la plaque de la première partition (33) et la seconde plaque de partition (34) peuvent s'engager et coulisser relativement l'une avec l'autre tels que la seconde plaque de partition (34) et la première plaque de partition (33) peuvent être alignées ou décalées par rapport a l'une de l'autre sélectivement.

11. L'affichage avec une structure de stabilité de liquide selon la revendication 10, dans lequel la première plaque de partition (33) est muni d'une cavité (332), et la seconde plaque de partition (34) est pourvue d'une protubérance (342), de telle sorte que la protubérance (342) puisse s'engager et glisser dans la cavité (332).

12. L'affichage avec une structure de stabilité de liquide selon la revendication 10, comprenant en outre un bouton (36) s'étendant hors de la base de support (20) pour pousser la première ou la deuxième plaque de partition (33, 34).

13. L'affichage avec une structure de stabilité de liquide selon la revendication 1, dans lequel la base de support (20) est faite d'une manière transparente.
